# EUROPEAN PATENT SPECIFICATION

(11) **EP 4 072 169 B1**
(45) Date of publication and mention of the grant of the patent: **21.08.2024**
(21) Application number: 20914278.5
(22) Date of filing: 14.01.2020
(51) Int. Cl.: H04W 4/06

(54) **MULTICAST SERVICE TRANSMISSION METHOD AND APPARATUS**
VERFAHREN UND VORRICHTUNG ZUR MULTICAST-DIENSTÜBERTRAGUNG
PROCÉDÉ ET APPAREIL DE TRANSMISSION D'UN SERVICE DE MULTIDIFFUSION

(43) Date of publication of application: 12.10.2022
(73) Proprietor: Huawei Technologies Co., Ltd., Shenzhen, Guangdong 518129 (CN)
(72) Inventor: CHEN, Lei, Shenzhen, Guangdong 518129 (CN); XU, Bin, Shenzhen, Guangdong 518129 (CN); LI, Bingzhao, Shenzhen, Guangdong 518129 (CN)
(74) Representative: Pfenning, Meinig & Partner mbB
(86) International application number: PCT/CN2020/072086
(87) International publication number: WO 2021/142634

(56) References cited:
- EP-A1- 3 258 713
- WO-A1-2017/049544
- WO-A1-2019/206075
- CN-A- 107 889 064
- CN-A- 107 889 066
- US-A1- 2014 044 071
- US-A1- 2018 049 224
- US-A1- 2019 075 614
- US-A1- 2019 357 238

## Description

### TECHNICAL FIELD

Embodiments of this application relate to the field of communication technologies, and in particular, to a multicast service transmission method and an apparatus.

### BACKGROUND

To effectively utilize mobile communication network resources, a multimedia broadcast multicast service (multimedia broadcast multicast service, MBMS) is introduced into a 3rd generation partnership project (3rd generation partnership project, 3GPP) network. For example, a network device may send an MBMS to a plurality of terminal devices in one or more cells, and the plurality of terminal devices may receive the MBMS in the one or more cells. In this way, point-to-multipoint service transmission from one service source to a plurality of terminal devices is implemented.

A technology for sending the MBMS may include: a multicast broadcast single frequency network (multicast broadcast single frequency network, MBSFN) technology and a single-cell point-to-multipoint (single-cell point-to-multipoint, SC-PTM) technology. The SC-PTM technology is used as an example. The MBMS is associated with a group radio network temporary identifier (group radio network temporary identifier, G-RNTI). When terminal devices in a specific cell require an MBMS, a network device may scramble, by using a G-RNTI corresponding to the MBMS, a physical downlink control channel (physical downlink control channel, PDCCH) for scheduling the MBMS, and send the scrambled PDCCH to a plurality of terminal devices in the cell or on a component carrier (component carrier, CC) corresponding to the cell. On a terminal device side, each terminal device may monitor and receive, by using the G-RNTI, the PDCCH sent in the cell, and receive the MBMS based on the PDCCH.

Currently, to increase transmission bandwidth, 3GPP introduces a carrier aggregation (carrier aggregation, CA) technology. In the CA technology, two or more CCs may be aggregated, and a network device may send services with same content by using a plurality of aggregated CCs. For example, when the network device sends an MBMS by using the SC-PTM technology, the network device may use the CA technology to send a scrambled PDCCH to a terminal device by using a part of a plurality of CCs. However, on a terminal device side, the terminal device does not know a specific CC used by the network device to send the PDCCH. In this case, the terminal device needs to monitor the PDCCH on all CCs by using a G-RNTI corresponding to the MBMS, and receives the MBMS based on the detected PDCCH. Consequently, power consumption of the terminal device is excessively high.
US 2014/044071 A1 discloses that at a base station: receiving a first message including an indication of a control channel change requirement; mapping at least one single broadcast service to a plurality of component carriers; generating a second message including a control channel change notification for the broadcast service based on the mapping; and transmitting the second message on at least one component carrier to at least one wireless communication unit.
US 2019/357238 A1 discloses that at least one of multiple active resources (e.g., BWPs) of a first cell may be selected to send scheduling information for other cells. A base station may send downlink control information (DCI) for scheduling a second cell using the selected BWP. A wireless device may monitor a physical downlink control channel (PDCCH) of the selected BWP to detect the DCI for scheduling (e.g., cross-carrier scheduling) the second cell.

### SUMMARY

The present invention is set out in the appended set of claims. Embodiments of this application provide a multicast service transmission method and an apparatus, to reduce power consumption of a terminal device for receiving a multicast service in a CA scenario.

### BRIEF DESCRIPTION OF DRAWINGS

FIG. 1a is a schematic diagram of a carrier aggregation scenario according to an embodiment of this application;
FIG. 1b is a schematic diagram of a dual connectivity scenario according to an embodiment of this application;
FIG. 2 is a diagram of an architecture of a communication system according to an embodiment of this application;
FIG. 3 is a schematic composition diagram of a communication apparatus according to an embodiment of this application;
FIG. 4 is a flowchart of a multicast service transmission method according to an embodiment of this application;
FIG. 5 is a schematic diagram of multicast service transmission according to an embodiment of this application;
FIG. 6 is a flowchart of configuration according to an embodiment of this application;
FIG. 7 is a flowchart of another multicast service transmission method according to an embodiment of this application;
FIG. 8 is a schematic composition diagram of a communication apparatus 80 according to an embodiment of this application;
FIG. 9 is a schematic composition diagram of a communication apparatus 90 according to an embodiment of this application;
FIG. 10 is a schematic composition diagram of a communication apparatus 100 according to an embodiment of this application;
FIG. 11 is a schematic composition diagram of a communication system according to an embodiment of this application; and
FIG. 12 is a schematic composition diagram of another communication system according to an embodiment of this application.

### DETAILED DESCRIPTION OF EMBODIMENTS

First, to understand embodiments of this application, terms in embodiments of this application are described.

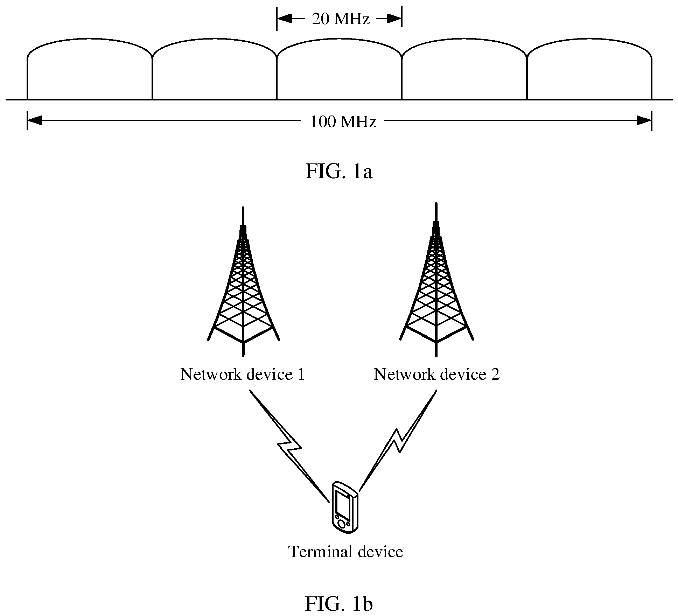

Carrier aggregation (carrier aggregation, CA) is to aggregate two or more component carriers (component carriers, CCs) to form larger transmission bandwidth. The CA is a technology for increasing transmission bandwidth, and can effectively improve uplink and downlink transmission rates. For example, as shown in FIG. 1a, five 20-megahertz (MHz) CCs may be aggregated by using the CA technology, to implement transmission bandwidth of a maximum of 100 MHz.

A carrier may be referred to as a cell (cell). Based on different types of services transmitted in cells, the cells may be classified into a primary cell (primary cell, PCell) and a secondary cell (secondary cell, SCell). When a terminal device has a CA capability, the terminal device may receive common channel information, access a network, and perform another operation in a PCell, and may perform service transmission and the like in an SCell.

It can be learned from the foregoing that in a CA scenario, the terminal device may support simultaneous service transmission in a plurality of cells. Currently, the plurality of cells supported by the terminal device may be preconfigured by a network device for the terminal device. When the network device sends a service to the terminal device, the network device may select, from the plurality of cells supported by the terminal device, an appropriate cell, for example, an idle cell; scramble, by using an RNTI corresponding to the cell, a physical downlink control channel (physical downlink control channel, PDCCH) for scheduling the service; and send the PDCCH and the service to the terminal device in the cell. On a terminal device side, because the terminal device is unaware of sending behavior of the network device, the terminal device monitors, by using the RNTI in all the cells supported by the terminal device, the PDCCH sent by the network device, and receives, based on the detected PDCCH, the service sent by the network device. Consequently, power consumption of the terminal device is excessively high. To resolve a problem of excessively high power consumption of the terminal device, in embodiments of this application, the network device indicates, to the terminal device, the cell for sending the PDCCH, so that the terminal device monitors the PDCCH in the cell indicated by the network device, and receives, based on the detected PDCCH, the service sent by the network device. Therefore, the power consumption is reduced.

It should be noted that, in embodiments of this application, the service sent by the network device to the terminal device may be a multicast service, or may be a unicast service. This is not limited. The multicast service may be a service simultaneously sent by the network device to two or more network devices, and the unicast service may be a service sent by the network device to one terminal device. The following embodiments are described by using an example in which a network device sends a multicast service to a terminal device in a CA scenario. For a process in which the network device sends a unicast service to the terminal device in the CA scenario, refer to an implementation in which the network device sends the multicast service to the terminal device.

A PDCCH is mainly for carrying downlink control information (downlink control information, DCI). The DCI may include common control information (for example, system information), user-specific information (for example, a downlink resource assignment indication, uplink scheduling, a random access response, and an uplink power control parameter), and the like. The PDCCH may schedule, by using the DCI carried by the PDCCH, a service sent by a network device. For example, the DCI may be for indicating a transmission parameter of the service sent by the network device, for example, a time-frequency resource location of the service sent by the network device. Before the network device sends the service, the network device scrambles the PDCCH by using an RNTI, and sends the scrambled PDCCH to a terminal device. The terminal device demodulates/descrambles the PDCCH by using the RNTI, to obtain the DCI, and then receives, at the time-frequency resource location indicated by the DCI, the service sent by the network device.

An RNTI may be referred to as a radio network temporary identifier (radio network temporary identifier). A terminal device may correspond to a plurality of RNTIs, and implement, in a manner of scrambling a PDCCH by using the RNTI, functions such as system broadcast and scheduling of a specified service of a user. The RNTI may correspond to/be associated with a service scheduled by the PDCCH. One service may correspond to/be associated with one RNTI, and different services correspond to different RNTIs. For example, a service 1 may correspond to an RNTI 1, a service 2 may correspond to an RNTI 2, and a service 3 may correspond to an RNTI 3. A correspondence/an association relationship between a service and an RNTI may be preconfigured in the terminal device and/or a network device that provides the service for the terminal device. Alternatively, the correspondence/association relationship between a service and an RNTI is configured by the network device, and is sent by the network device to the terminal device by using higher layer signaling. For example, the network device may include the correspondence/association relationship between a service and an RNTI in the higher layer signaling, and send the higher layer signaling to the terminal device. Currently, a plurality of types of RNTIs are obtained through classification based on different service types corresponding to the RNTIs, for example, a cell radio network temporary identifier (cell radio network temporary identifier, C-RNTI) and a group radio network temporary identifier (group radio network temporary identifier, G-RNTI). The C-RNTI corresponds to a unicast service, and the G-RNTI corresponds to a multicast service. The C-RNTI may be used as an identifier of a terminal device in signal information between the terminal device and a network device, and is for identifying the terminal device.

A connection mode of a terminal device in a CA scenario is not limited in embodiments of this application. Connection modes of the terminal device may include a dual connectivity (dual connectivity, DC) mode and a non-DC mode. When the terminal device works in the DC mode, a network device that sends a service to the terminal device by using a CA technology may be a primary network device. When the terminal device works in the non-DC mode, a network device that sends a service to the terminal device by using a CA technology may be a primary network device or a secondary network device. This is not limited.

The DC mode means that a terminal device accesses two network devices. DC can further increase a transmission rate based on CA, and can further improve transmission reliability. The two network devices connected to the terminal device may be a primary network device and a secondary network device. Cells covered by each network device may form one CA group. The two network devices may be considered as two CA groups. A CA group covered by the primary network device may be a master cell group (master cell group, MCG). The MCG may carry a control plane and a user plane of the terminal device, and may be responsible for sending a service to the terminal device and sending control signaling to the terminal device. A CA group covered by the secondary network device may be referred to as a secondary cell group (secondary cell group, SCG). The SCG may carry the user plane of the terminal device, and may be responsible for sending a service to the terminal device.

For example, as shown in FIG. 1b, a terminal device may access a network device 1 and a network device 2. It is assumed that cells covered by the network device 1 form a CA group 1, cells covered by the network device 2 form a CA group 2, the CA group 1 is an MCG, and the CA group 2 is an SCG. In this case, the network device 1 may send control signaling and transmit a service to the terminal device on the CA group 1, and the network device 2 may transmit a service and the like to the terminal device on the CA group 2.

The non-DC mode means that a terminal device accesses one network device, and the network device provides a service for the terminal device. The network device may be referred to as a primary network device of the terminal device, and is responsible for sending control plane signaling and a service to the terminal device.

With reference to the accompanying drawings of this specification, the following describes in detail, by using an example in which a network device sends a multicast service to a terminal device in a CA scenario, a multicast service transmission method that is provided in embodiments of this application and that is for resolving a problem of excessively high power consumption of the terminal device in the CA scenario.

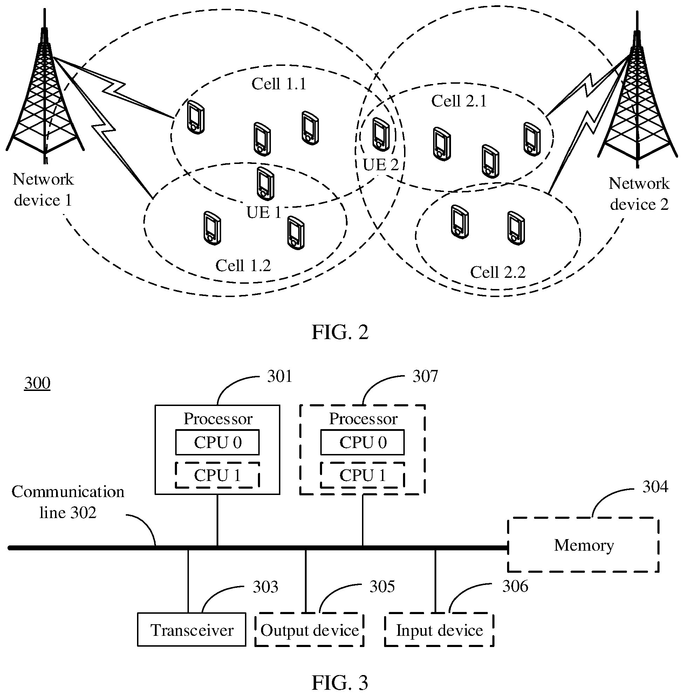

The multicast service transmission method provided in embodiments of this application is applicable to a communication system that supports carrier aggregation (carrier aggregation, CA) and dual connectivity (dual connectivity, DC), for example, is applicable to any system in a 4th generation (4th generation, 4G) system, a long term evolution (long term evolution, LTE) system, a 5th generation (5th generation, 5G) system, a new radio (new radio, NR) system, or an NR-vehicle-to-everything (vehicle-to-everything, V2X) system, or is applicable to another next-generation communication system or the like. This is not limited. The following uses a communication system shown in FIG. 2 as an example to describe the method provided in embodiments of this application.

FIG. 2 is a schematic diagram of the communication system according to an embodiment of this application. As shown in FIG. 2, the communication system may include a plurality of network devices and a plurality of terminal devices, for example, user equipments (user equipments, UEs). The UE may be located in coverage of the network device, and is connected to the network device through a Uu interface. In the system shown in FIG. 2, each network device may cover one or more cells. The terminal device may work in a DC mode or a non-DC mode, and may be located in one or more cells covered by the network device. That the terminal device may receive, by using a cell in which the terminal device is located, a service provided by the network device may alternatively be described as that the network device may provide the service for the terminal device by using the cell covered by the network device. In this embodiment of this application, a cell that provides a service for the terminal device may be referred to as a serving cell. For example, as shown in FIG. 2, a network device 1 covers a cell 1.1 and a cell 1.2. UE 1 may be located in the cell 1.1 and the cell 1.2, and may receive, by using the cell 1.1 and the cell 1.2, a service provided by the network device 1. In this case, the cell 1.1 and the cell 1.2 may be referred to as serving cells of the UE 1. A network device 2 covers a cell 2.1 and a cell 2.2. UE 2 may be located in the cell 1.1 and the cell 2.1, and may receive, by using the cell 1.1, a service provided by the network device 1, and receive, by using the cell 2.2, a service provided by the network device 2. In this case, the cell 1.1 and the cell 2.1 may be referred to as serving cells of the UE 2.

It should be noted that FIG. 2 is merely an example framework diagram. In FIG. 2, a quantity of network devices, a quantity of UEs, and a quantity of cells covered by the network device are not limited, and a name of each device is not limited. In addition to the function node shown in FIG. 2, another node may be further included, for example, a core network device, a gateway device, and an application server. This is not limited.

The network device in FIG. 2 is mainly configured to implement functions such as resource scheduling, radio resource management, and radio access control of the terminal device. Specifically, the network device may be any node of a small base station, a wireless access point, a transmission reception point (transmission reception point, TRP), a transmission point (transmission point, TP), and another access node. In embodiments of this application, an apparatus configured to implement a function of the network device may be a network device, or may be an apparatus that can support the network device in implementing the function, for example, a chip system. The following describes, by using an example in which the apparatus configured to implement the function of the network device is the network device, the multicast service transmission method provided in embodiments of this application.

The UE in FIG. 2 may be terminal equipment (terminal equipment), a mobile station (mobile station, MS), a mobile terminal (mobile terminal, MT), or the like. Specifically, the UE may be a mobile phone (mobile phone), a tablet computer, or a computer with wireless sending and receiving functions, or may be a virtual reality (virtual reality, VR) device, an augmented reality (augmented reality, AR) device, a wireless terminal in industrial control, a wireless terminal in self driving, a wireless terminal in telemedicine, a wireless terminal in a smart grid, a wireless terminal in a smart city (smart city), a smart household, a vehicle-mounted terminal, or the like. In embodiments of this application, an apparatus configured to implement a function of the terminal device may be a terminal device, or may be an apparatus that can support the terminal device in implementing the function, for example, a chip system. The following describes, by using an example in which the apparatus configured to implement the function of the terminal device is the terminal device, the multicast service transmission method provided in embodiments of this application.

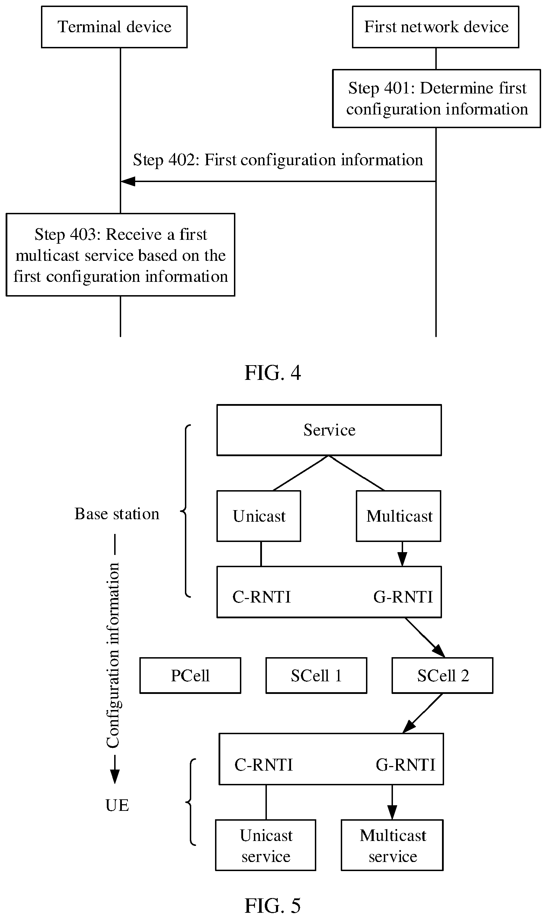

In the system shown in FIG. 2, to resolve an existing problem of a power consumption increase caused when the terminal device blindly monitors a PDCCH in all cells and receives a multicast service based on the detected PDCCH when receiving the multicast service in a CA scenario, the network device may indicate, to the terminal device, configuration information related to the multicast service, for example, a cell identifier of a serving cell corresponding to the first multicast service and one or more of the following information: an RNTI corresponding to the multicast service, an identifier of the multicast service, and the like. The terminal device receives, based on the configuration information related to the multicast service, the PDCCH in the specified serving cell by using the RNTI, and receives the multicast service based on the received PDCCH. Specifically, for an implementation process, refer to descriptions in embodiments corresponding to FIG. 4 to FIG. 7.

It should be noted that, in embodiments of this application, the serving cell corresponding to the first multicast service may be a serving cell corresponding to the PDCCH for scheduling the first multicast service. The network device may send, to the terminal device in the serving cell, the PDCCH for scheduling the first multicast service.

During specific implementation, the network elements shown in FIG. 2, for example, the terminal device and the network device, may use a composition structure shown in FIG. 3 or include components shown in FIG. 3.

FIG. 3 is a schematic composition diagram of a communication apparatus 300 according to an embodiment of this application. When the communication apparatus 300 has a function of the terminal device described in embodiments of this application, the communication apparatus 300 may be a terminal device, or a chip or a system-on-a-chip in the terminal device. When the communication apparatus 300 has a function of the network device described in embodiments of this application, the communication apparatus 300 may be a network device, or a chip or a system-on-a-chip in the network device.

As shown in FIG. 3, the communication apparatus 300 may include a processor 301, a communication line 302, and a transceiver 303. Further, the communication apparatus 300 may include a memory 304. The processor 301, the memory 304, and the transceiver 303 may be connected through the communication line 302.

The processor 301 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 301 may alternatively be another apparatus having a processing function, for example, a circuit, a component, or a software module.

The communication line 302 is configured to transmit information between components included in the communication apparatus 300.

The transceiver 303 is configured to communicate with another device or another communication network. The another communication network may be the Ethernet, a radio access network (radio access network, RAN), a wireless local area network (wireless local area network, WLAN), or the like. The transceiver 303 may be a radio frequency module, a communication interface, or any apparatus that can implement communication. In this embodiment of this application, an example in which the transceiver 303 is the radio frequency module is merely used for description. The radio frequency module may include an antenna, a radio frequency circuit, and the like. The radio frequency circuit may include a radio frequency integrated chip, a power amplifier, and the like.

The memory 304 is configured to store instructions. The instructions may be a computer program.

The memory 304 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or other optical disk storage, optical disc storage, or a magnetic disk storage medium or another magnetic storage device. The optical disc storage includes a compact disc, a laser disc, an optical disc, a digital versatile disc, a Blu-ray disc, and the like.

It should be noted that the memory 304 may exist independently of the processor 301, or may be integrated with the processor 301. The memory 304 may be configured to store instructions, program code, some data, or the like. The memory 304 may be located inside the communication apparatus 300, or may be located outside the communication apparatus 300. This is not limited. The processor 301 is configured to execute the instructions stored in the memory 304, to implement multicast service transmission methods provided in the following embodiments of this application.

In an example, the processor 301 may include one or more CPUs, for example, a CPU 0 and a CPU 1 in FIG. 3.

In an optional implementation, the communication apparatus 300 includes a plurality of processors. For example, in addition to the processor 301 in FIG. 3, the communication apparatus 300 may further include a processor 307.

In an optional implementation, the communication apparatus 300 further includes an output device 305 and an input device 306. For example, the input device 306 is a device such as a keyboard, a mouse, a microphone, or a joystick, and the output device 305 is a device such as a display or a speaker (speaker).

It should be noted that the communication apparatus 300 may be a desktop computer, a portable computer, a network server, a mobile phone, a tablet computer, a wireless terminal device, an embedded device, a chip system, or a device having a structure similar to that in FIG. 3. In addition, the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

In this embodiment of this application, the chip system may include a chip, or may include a chip and another discrete component.

The following describes the multicast service transmission method provided in embodiments of this application with reference to the communication system shown in FIG. 2. Each device in the following embodiments may have the components shown in FIG. 3. Actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited. Actions in embodiments of this application are merely examples, and other names may alternatively be used during specific implementation. For example, "carried in" in embodiments of this application may alternatively be replaced with "carried in" or "included in".

FIG. 4 is a flowchart of a multicast service transmission method according to an embodiment of this application. As shown in FIG. 4, the method includes the following steps.

Step 401: A first network device determines first configuration information.

The first network device may be any network device in FIG. 2, for example, may be the network device 1 in FIG. 2, or may be the network device 2 in FIG. 2. This is not limited in this embodiment of this application.

The first configuration information may be for indicating a terminal device to receive a first multicast service. The terminal device may be any UE in a coverage area of the first network device. The terminal device may work in a DC mode, or may work in a non-DC mode. For example, as shown in FIG. 2, when the first network device is the network device 1 in FIG. 2, the terminal device may be any UE in a coverage area of the network device 1, for example, may be any UE in the cell 1.1, or may be any UE in the cell 1.2. When the first network device is the network device 2 in FIG. 2, the terminal device may be any UE in a coverage area of the network device 2, for example, may be any UE in the cell 2.1, or may be any UE in the cell 2.2. The first multicast service may be any multicast service provided by a network device for the terminal device. This is not limited. When the terminal device works in the non-DC mode, the first multicast service may be any multicast service provided by the first network device for the terminal device. When the terminal device works in the DC mode, the first multicast service may be any multicast service provided for the terminal device by a secondary cell group, for example, the following second network device.

The first configuration information may include an identifier of a serving cell corresponding to the first multicast service and one or more of the following information: an identifier of the first multicast service and an RNTI corresponding to the first multicast service. To be specific, the first configuration information may include the identifier of the serving cell corresponding to the first multicast service and the identifier of the first multicast service, or the first configuration information may include the identifier of the serving cell corresponding to the first multicast service and the RNTI corresponding to the first multicast service, or the first configuration information may include the identifier of the serving cell corresponding to the first multicast service, the identifier of the first multicast service, and the RNTI corresponding to the first multicast service.

The identifier of the first multicast service may uniquely identify the first multicast service. The identifier of the first multicast service may be an application layer identifier of the first multicast service. For example, the identifier of the first multicast service may be a service identifier (service ID) of the first multicast service. As described above, the first multicast service may correspond to the RNTI. The network device may scramble, by using the RNTI corresponding to the first multicast service, a PDCCH for scheduling the first multicast service, and send the scrambled PDCCH and the first multicast service. Correspondingly, the terminal device may descramble, by using the RNTI corresponding to the first multicast service, the PDCCH sent by the network device, and receive the first multicast service based on the successfully descrambled PDCCH.

The RNTI corresponding to the first multicast service may be referred to as a G-RNTI or a multicast RNTI. The RNTI corresponding to the first multicast service may be equivalent to a low layer identifier of the first multicast service, and the first multicast service may be uniquely identified based on the RNTI corresponding to the first multicast service and a correspondence between a service and an RNTI.

The serving cell corresponding to the first multicast service may be included in a serving cell set of the terminal device, and may be any serving cell in the serving cell set of the terminal device. The PDCCH for scheduling the first multicast service may be sent in the serving cell corresponding to the first multicast service. For example, the network device may select, from the serving cell set of the terminal device in an existing manner, the serving cell corresponding to the first multicast service, and send, to the terminal device in the selected serving cell, the PDCCH for scheduling the first multicast service. The serving cell set of the terminal device may include one or more serving cells of the terminal device. Each serving cell corresponds to one cell identifier (cell identifier, cell ID). In other words, different serving cells of the terminal device correspond to different cell identifiers, and the cell identifier of the serving cell may uniquely identify the serving cell. Specifically, the serving cell set of the terminal device and the identifier of each serving cell in the serving cell set may be preconfigured by a network side for the terminal device.

In a possible design, the cell identifier of the serving cell may be a PCI of the serving cell.

In another possible design, the cell identifier of the serving cell may be a number of the serving cell in the serving cell set of the terminal device, for example, may be an index of the serving cell in a cell list configured by the network side for the terminal device. Cell identifiers of serving cells covered by different network devices may be the same or may be different. This is not limited.

For example, the serving cell set of the terminal device includes five serving cells, and the five serving cells may be numbered by using a number 1 to a number 5, so that cell identifiers of the five serving cells are a serving cell 1, a serving cell 2, a serving cell 3, a serving cell 4, and a serving cell 5.

In still another possible design, the cell identifier of the serving cell may be a cell global identifier (cell global identifier, CGI) or an evolved cell global identifier (evolved cell global identifier, ECGI) of the serving cell.

It should be noted that, in addition to the cell identifier of the serving cell corresponding to the first multicast service and one or more of the following information: the identifier of the first multicast service and the RNTI corresponding to the first multicast service, the first configuration information may further include other information, for example, an identifier of a transmission resource of the first multicast service. The identifier of the transmission resource of the first multicast service may be for indicating the transmission resource of the first multicast service. The transmission resource of the first multicast service may be a bandwidth part (bandwidth part, BWP) or a transmission resource at another granularity. This is not limited.

For step 401, the first network device may determine the first configuration information in a plurality of methods.

In an example, when the terminal device works in the non-DC mode, in other words, when the terminal device is currently connected to the first network device, that the first network device determines the first configuration information may include: When the first network device determines that the terminal device needs to receive the first multicast service or the first network device determines that the terminal device joins a multicast group corresponding to the first multicast service, the first network device determines the identifier of the serving cell that provides the first multicast service for the terminal device, and includes the identifier of the serving cell corresponding to the first multicast service and the identifier of the first multicast service in the first configuration information. Alternatively, the first network device determines the identifier of the serving cell that provides the first multicast service for the terminal device, determines, based on the identifier of the first multicast service and the correspondence/an association relationship between a service and an RNTI, the RNTI corresponding to the first multicast service, and includes the identifier of the serving cell corresponding to the first multicast service and the identifier of the first multicast service in the first configuration information. Alternatively, the first network device determines the identifier of the serving cell that provides the first multicast service for the terminal device, determines, based on the identifier of the first multicast service and the correspondence/an association relationship between a service and an RNTI, the RNTI corresponding to the first multicast service, and includes the identifier of the serving cell corresponding to the first multicast service, the identifier of the first multicast service, and the RNTI corresponding to the first multicast service in the first configuration information.

In another example, when the terminal device works in the DC mode, in other words, when the terminal device is connected to both the first network device and the second network device, that the first network device determines the first configuration information may include: The first network device sends first information including an identifier of the terminal device and the identifier of the first multicast service to the second network device, receives second configuration information from the second network device, and determines the first configuration information based on the second configuration information. Alternatively, when the terminal device works in the DC mode, the first network device determines that the terminal device needs to receive the first multicast service or the first network device determines that the terminal device joins a multicast group corresponding to the first multicast service, and generates the first configuration information. For example, the first network device may determine the first configuration information with reference to the foregoing process in which the first network device determines the first configuration information when the terminal device works in the non-DC mode. Details are not described.

The second network device may be any network device that can provide/send the first multicast service for/to the terminal device.

The second configuration information may include one or more of the identifier of the first multicast service, the RNTI corresponding to the first multicast service, and the cell identifier of the serving cell corresponding to the first multicast service.

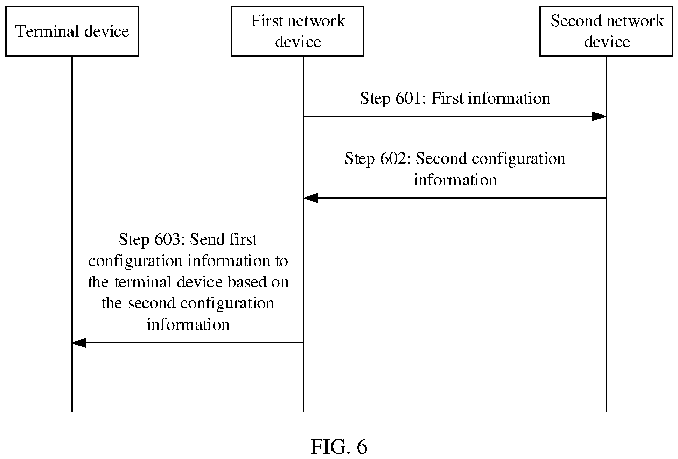

When the terminal device works in the DC mode, with reference to a method shown in FIG. 6, the first network device may obtain the second configuration information from the second network device, and determine the first configuration information based on the second configuration information.

Step 402: The first network device sends the first configuration information to the terminal device.

In an example, that the first network device sends the first configuration information to the terminal device may include: The first network device sends the first configuration information to the terminal device by including the first configuration information in DCI, for example, sends the DCI to the terminal device in a primary cell of the first network device, where the DCI includes the first configuration information.

In another example, that the first network device sends the first configuration information to the terminal device may include: The first network device sends the first configuration information to the terminal device by including the first configuration information in radio resource control (radio resource control, RRC) signaling, for example, sends the RRC signaling to the terminal device in a primary cell of the first network device, where the RRC signaling includes the first configuration information.

Step 403: The terminal device receives the first configuration information, and receives the first multicast service based on the first configuration information.

That the terminal device receives the first multicast service based on the first configuration information may include: The terminal device determines, based on the first configuration information, the RNTI and the serving cell that correspond to the first multicast service, monitors, in the serving cell by using the RNTI, the PDCCH for scheduling the first multicast service, and receives the first multicast service at a time-frequency resource location indicated by the PDCCH.

The PDCCH for scheduling the first multicast service and the first multicast service may be sent by the first network device to the terminal device, or may be sent by the second network device to the terminal device. For example, when the terminal device works in the non-DC mode, the first network device may scramble, by using the RNTI, the PDCCH for scheduling the first multicast service, send the scrambled PDCCH to the terminal device in the serving cell corresponding to the first multicast service, and send the first multicast service on a time-frequency resource indicated by the PDCCH. When the terminal device works in the DC mode, the second network device may scramble, by using the RNTI, the PDCCH for scheduling the first multicast service, send the scrambled PDCCH to the terminal device in the serving cell corresponding to the first multicast service, and send the first multicast service on a time-frequency resource indicated by the PDCCH. In this way, in the DC mode, the second network device may send the multicast service to the terminal device, so that load of the first network device for sending the multicast service is reduced. It should be noted that, in the DC mode, when the first network device has sufficient transmission resources for sending the first multicast service, the first network device may alternatively send, to the terminal device, the PDCCH for scheduling the first multicast service and the first multicast service. This is not limited.

In a first possible implementation, the first configuration information includes the identifier of the serving cell corresponding to the first multicast service and the identifier of the first multicast service. The terminal device may identify the serving cell corresponding to the first multicast service based on the cell identifier of the serving cell, determine the RNTI corresponding to the first multicast service based on the identifier of the first multicast service and the preconfigured correspondence/association relationship between a service and an RNTI, monitor, in all search spaces of the serving cell by using the determined RNTI, the PDCCH for scheduling the first multicast service, and receive the first multicast service at the time-frequency resource location indicated by the detected PDCCH.

In a second possible implementation, the first configuration information includes the identifier of the serving cell corresponding to the first multicast service and the RNTI corresponding to the first multicast service. The terminal device may identify the serving cell based on the cell identifier of the serving cell, monitor, in all search spaces of the serving cell by using the RNTI corresponding to the first multicast service, the PDCCH for scheduling the first multicast service, and receive the first multicast service at the time-frequency resource location indicated by the detected PDCCH.

In a third possible implementation, the first configuration information includes the identifier of the serving cell corresponding to the first multicast service, the identifier of the first multicast service, and the RNTI corresponding to the first multicast service. The terminal device may identify the serving cell based on the cell identifier of the serving cell, determine a search space corresponding to the first multicast service based on the identifier of the first multicast service and a correspondence between a service and a search space, monitor, in the search space corresponding to the first multicast service in the serving cell by using the RNTI corresponding to the first multicast service, the PDCCH for scheduling the first multicast service, and receive the first multicast service at the time-frequency resource location indicated by the detected PDCCH. In this way, the PDCCH can be monitored in the specified search space of the serving cell, so that power consumption of the terminal device for monitoring the PDCCH is reduced.

The correspondence between a service and a search space may be preconfigured by the network device for the terminal device. Specifically, for the correspondence between a service and a search space, refer to existing descriptions. Details are not described.

It should be noted that, in FIG. 4, the first multicast service is used as an example to describe a process in which the terminal device receives the first multicast service. With reference to the method shown in FIG. 4, in a CA scenario, the network device may indicate the terminal device to monitor, in a specified serving cell, a PDCCH for scheduling a unicast service, to reduce power consumption of the terminal device for monitoring the PDCCH and receiving the unicast service based on the detected PDCCH. For example, the network device may send, to the terminal device, configuration information related to the unicast service, for example, a cell identifier of the serving cell corresponding to the unicast service and one or more of the following information: an identifier of the unicast service and an RNTI corresponding to the unicast service. The terminal device may monitor, in the specified serving cell based on the configuration information related to the unicast service by using the corresponding RNTI, the PDCCH for scheduling the unicast service, and receive the unicast service at a time-frequency resource location indicated by the detected PDCCH. In this way, the terminal device does not need to monitor, by using the corresponding RNTI in all cells supported by the terminal device, the PDCCH for scheduling the unicast service, so that the power consumption of the terminal device is reduced. The RNTI corresponding to the unicast service may be referred to as a cell RNTI (cell RNTI, C-RNTI) or a unicast RNTI. This is not limited.

That the network device is a base station and the terminal device is UE is used as an example. For example, as shown in FIG. 5, the UE has a CA capability, and supports communication with the base station by using a PCell, an SCell 1, and an SCell 2. Before determining to send a multicast service to the UE by using the SCell 2, the base station may include a G-RNTI corresponding to the multicast service and an identifier of the SCell 2 in configuration information, and send the configuration information to the UE. Subsequently, the UE may monitor, in the SCell 2 based on the configuration information by using the G-RNTI, a PDCCH for scheduling the multicast service, and receive the multicast service at a time-frequency resource location indicated by the detected PDCCH. The UE does not need to monitor, in the three cells by using the G-RNTI, the PDCCH for scheduling the multicast service, so that power consumption of the terminal device is reduced. The three cells are the PCell, the SCell 1, and the SCell 2.

Similarly, before determining to send a unicast service to the UE by using the SCell 1, the base station may include a C-RNTI corresponding to the unicast service and an identifier of the SCell 1 in configuration information, and send the configuration information to the UE. Subsequently, the UE may monitor, in the SCell 1 based on the configuration information by using the C-RNTI, a PDCCH for scheduling the unicast service, and receive the unicast service at a time-frequency resource location indicated by the detected PDCCH. The UE does not need to monitor, in the three cells by using the C-RNTI, the PDCCH for scheduling the unicast service, so that power consumption of the terminal device is reduced. The three cells are the PCell, the SCell 1, and the SCell 2.

It should be noted that, in FIG. 4, the first multicast service is used as an example to describe the process in which the terminal device receives the first multicast service. With reference to the method shown in FIG. 4, the terminal device may receive a plurality of multicast services in a plurality of specified serving cells. For example, the first network device may send, to the terminal device, identifiers of the plurality of multicast services, an RNTI corresponding to each multicast service, and a cell identifier of a serving cell corresponding to each multicast service. The terminal device receives the plurality of multicast services in the plurality of serving cells based on received configuration information.

That the terminal device is UE and the network device is a base station is used as an example. For example, configuration information sent by the base station to the UE includes { multicast service 1, RNTI 1, serving cell 1} and {multicast service 2, RNTI 2, serving cell 2}. After receiving the configuration information, the UE monitors, in the serving cell 1 based on the configuration information by using the RNTI 1, a PDCCH for scheduling the multicast service 1, and receives the multicast service 1 on a time-frequency resource indicated by the detected PDCCH; monitors, in the serving cell 2 based on the configuration information by using the RNTI 2, a PDCCH for scheduling the multicast service 2, and receives the multicast service 2 on a time-frequency resource indicated by the detected PDCCH.

Through application of the method shown in FIG. 4, the first network device may determine configuration information related to a multicast service, for example, a cell identifier of a serving cell corresponding to the first multicast service and one or more of the following information: an RNTI corresponding to the multicast service and an identifier of the multicast service; and notify the terminal device of the configuration information related to the multicast service. The terminal device monitors, in the specified serving cell based on the configuration information related to the multicast service by using the corresponding RNTI, a PDCCH for scheduling the multicast service, and receives the multicast service based on the detected PDCCH. Compared with a current technology, in the method shown in FIG. 4, the terminal device does not need to blindly monitor, in all serving cells, the PDCCH for scheduling the multicast service, so that power consumption of the terminal device for monitoring the PDCCH and receiving the multicast service based on the detected PDCCH in the CA scenario is reduced.

In a first possible implementation of the method shown in FIG. 4, when the terminal works in the DC mode, with reference to the method shown in FIG. 6, the first network device may obtain the second configuration information from the second network device, and determine the first configuration information based on the second configuration information. It should be noted that the method shown in FIG. 6 may be independent of the method shown in FIG. 4, and the method shown in FIG. 6 may be separately implemented. To be specific, in this embodiment of this application, the second network device is not limited to assisting, by using the configuration method shown in FIG. 6, the first network device in sending configuration information related to the first multicast service to the terminal device. In addition, with reference to the method shown in FIG. 6, the second network device may assist the first network device in sending other configuration information to the terminal device. For example, the terminal device may request an uplink transmission resource from the second network device through the first network device, and the second network device may assist the first network device in sending configuration information related to the uplink transmission resource and the like to the terminal device.

FIG. 6 is a flowchart of configuration according to an embodiment of this application. As shown in FIG. 6, the method includes the following steps.

Step 601: A first network device sends first information to a second network device.

The first network device may be a primary network device in FIG. 2 that provides a network service for the terminal device, and the second network device may be a secondary network device in FIG. 2 that provides a network device for the terminal device. It should be noted that, in this embodiment of this application, the primary network device and the secondary network device are relative concepts. The primary network device corresponds to a master cell group, carries a control plane and a user plane of the terminal device, and may send a service, control signaling, and the like to the terminal device. The secondary network device corresponds to a secondary cell group, carries the user plane of the terminal device, and may send a service to the terminal device.

The first information may include an identifier of a terminal device and an identifier of a first multicast service. The first information may be for indicating that the terminal device needs to receive the first multicast service. For example, the first information may be for requesting the second network device to send the first multicast service to the terminal device or requesting to add the terminal device to a multicast group corresponding to the first multicast service. When the second network device receives the first information, the second network device may determine, based on the first information, that the terminal device requires the first multicast service.

The identifier of the terminal device is for identifying a terminal device. Alternatively, it is described as that the identifier of the terminal device may be for identifying a specific terminal device that requires the first multicast service. Specifically, the identifier of the terminal device may be an international mobile subscriber identity (international mobile subscriber identity, IMSI) of the terminal device, a mobile subscriber identification number (mobile subscriber identification number, MSIN) of the terminal device, a temporary mobile subscriber identity (temporary mobile subscriber identity, TMSI) of the terminal device, a terminal device specific Xn application protocol identifier (UE specific Xn application protocol identifier, UE specific XnAP ID), or the like. Optionally, the identifier of the terminal device may alternatively be replaced with another identifier, and the another identifier can identify a specific terminal device that a unicast service is specific to. For example, the identifier of the terminal device may alternatively be replaced with a C-RNTI. This is not limited.

For a related definition of the identifier of the first multicast service, refer to the descriptions in step 401. Details are not described.

For example, when the first network device determines that the second network device is required to send the first multicast service to the terminal device, for example, when the first network device determines that the first network device is overloaded in sending the first multicast service and/or determines that the terminal device works in a DC mode, the first network device sends the first information to the second network device.

The first network device may obtain capability information of the terminal device in advance in an existing manner. The capability information of the terminal may include an indication indicating whether the terminal device works in the DC mode. Further, the first network device may determine, based on the capability information of the terminal device, that the terminal device works in the DC mode.

Specifically, the first network device may send the first information to the second network device by including the first information in a secondary cell group addition request, or send the first information to the second network device by including the first information in another dedicated message or a newly added message. This is not limited.

The secondary cell group addition request may be an add secondary base station message, an add secondary cell group (add secondary cell group, Add SCG) message, or a secondary base station addition request (S-NODE ADDITION REQUEST).

Step 602: The second network device receives the first information, and sends second configuration information to the first network device.

The second configuration information may be for indicating the terminal device to receive the first multicast service. A parameter included in the second configuration information may be the same as a parameter included in first configuration information. For example, the second configuration information may include one or more of the identifier of the first multicast service, an RNTI corresponding to the first multicast service, and a cell identifier of a serving cell corresponding to the first multicast service. The second configuration information may be any information that supports a transport protocol between the second network device and the first network device, and the first configuration information may be any information that supports a transport protocol between the first network device and the terminal device. For example, the first configuration information may be RRC signaling or DCI. A message format of the second configuration information may be different from a message format of the first configuration information, and a location of a parameter in the second configuration information is different from a location of the same parameter in the first configuration information. For example, both configuration information 1 and configuration information 2 may include the identifier of the serving cell. However, the identifier of the serving cell is located in a bit field from the first bit to the eighth bit of the second configuration information, and the identifier of the serving cell may be located in a bit field from the sixth bit to the thirteenth bit of the first configuration information.

For related descriptions of the RNTI corresponding to the first multicast service and the cell identifier of the serving cell corresponding to the first multicast service, refer to the descriptions in step 401. Details are not described.

For example, after receiving the first information, the second network device may determine, based on the identifier of the first multicast service and the identifier of the terminal device, that the terminal device requires the first multicast service. Subsequently, when determining, with reference to a transmission capability of the second network device, to provide the first multicast service for the terminal device, the second network device sends the second configuration information to the first network device.

Optionally, the second network device sends the second configuration information to the first network device by including the second configuration information in a secondary cell group addition response, or sends the second configuration information to the first network device by including the second configuration information in another dedicated message or a newly added message. This is not limited.

The secondary cell group addition response may also be described as an add secondary base station response, an Add SCG response, or an S-Node addition request acknowledge. This is not limited. For example, when the secondary cell group addition request is the add secondary base station message, the secondary cell group addition response may be the add secondary base station response; when the secondary cell group addition request is the Add SCG message, the secondary cell group addition response may be the Add SCG response; when the secondary cell group addition request is the S-Node addition request, the secondary cell group addition response may be the S-Node addition request acknowledge.

It should be noted that the two actions, to be specific, the action of including the first information in the secondary cell group addition request in step 601 and the action of including the second configuration information in the secondary cell group addition response in step 602, may coexist, or either of the two actions exists. This is not limited.

Step 603: The first network device receives the second configuration information, and sends the first configuration information to the terminal device based on the second configuration information.

For example, that the first network device sends the first configuration information to the terminal device based on the second configuration information may include: The first network device generates the first configuration information based on the second configuration information, and sends the first configuration information to the terminal device.

The first network device may include parameter information that is the same as that of the second configuration information, but formats of the two pieces of configuration information are different. For example, the network device encapsulates, based on the message format corresponding to the first configuration information, the parameter included in the second configuration information, to obtain the first configuration information.

In a first possible implementation, the second configuration information includes the RNTI corresponding to the first multicast service and the cell identifier of the serving cell corresponding to the first multicast service. The first network device obtains, from the second configuration information, the RNTI corresponding to the first multicast service and the cell identifier of the serving cell corresponding to the first multicast service, encapsulates the obtained RNTI corresponding to the first multicast service and the obtained cell identifier of the serving cell corresponding to the first multicast service based on the message format corresponding to the first configuration information to obtain the first configuration information, and sends the first configuration information to the terminal device. Alternatively, the first network device encapsulates, based on the message format corresponding to the first configuration information, the parameters obtained from the second configuration information and the identifier that is of the first multicast service and that is included in the first message to obtain the first configuration information, and sends the first configuration information to the terminal device.

In a second possible implementation, the second configuration information includes the identifier of the first multicast service, the RNTI corresponding to the first multicast service, and the cell identifier of the serving cell corresponding to the first multicast service. The first network device obtains the identifier of the first multicast service, the RNTI corresponding to the first multicast service, and the cell identifier of the serving cell corresponding to the first multicast service that are included in the second configuration information, encapsulates the obtained parameters based on the message format corresponding to the first configuration information to obtain the first configuration information, and sends the first configuration information to the network device.

A process in which the first network device sends the first configuration information to the terminal device is described in step 402. Details are not described.

It should be noted that FIG. 6 is described by using an example in which the terminal device requests the first multicast service, and the second network device configures configuration information related to the first multicast service for the terminal device. With reference to the method shown in FIG. 6, the first network device requests the second network device to provide a plurality of multicast services for the terminal device. When determining to provide the plurality of multicast services for the terminal device, the second network device configures configuration information related to the plurality of multicast services, and sends the configuration information to the terminal device through the first network device.

Through application of the method shown in FIG. 6, the first network device may request the second network device to assist the first network device in sending a multicast service to the terminal device, and configure configuration information related to the multicast service for the terminal device before the second network device sends the multicast service to the terminal device, so that the terminal device may receive, based on the configuration information related to the multicast service, the multicast service in a specified serving cell by using a corresponding RNTI. In this way, the terminal device does not need to blindly monitor, in all cells by using the corresponding RNTI, a PDCCH for scheduling the multicast service, so that power consumption of the terminal device for monitoring the PDCCH and receiving the multicast service at a time-frequency resource location indicated by the detected PDCCH in a CA scenario is reduced.

Further, in a second possible implementation of the method shown in FIG. 4, when the serving cell corresponding to the first multicast service is switched and/or the RNTI corresponding to the first multicast service changes, to ensure accuracy of receiving the multicast service by the terminal device based on the first configuration information, the first configuration information needs to be updated. The method further includes: The first network device obtains third configuration information for updating the first configuration information, and sends the third configuration information to the terminal device.

The third configuration information is for updating the first configuration information, and the third configuration information may include one or more of the identifier of the first multicast service, an RNTI corresponding to the first multicast service, and a cell identifier of a serving cell corresponding to the first multicast service. For example, the third configuration information may include the identifier of the first multicast service and the cell identifier of the serving cell corresponding to the first multicast service, or include the identifier of the first multicast service and the RNTI corresponding to the first multicast service, or include the identifier of the first multicast service, the RNTI corresponding to the first multicast service, and the cell identifier of the serving cell corresponding to the first multicast service. This is not limited. The RNTI that corresponds to the first multicast service and that is included in the third configuration information is different from the RNTI that corresponds to the first multicast service and that is included in the first configuration information, and/or the cell identifier that is of the serving cell corresponding to the first multicast service and that is included in the third configuration information is different from the cell identifier that is of the serving cell corresponding to the first multicast service and that is included in the first configuration information.

It should be noted that, in this embodiment of this application, it is not limited that the third configuration information obtained by the first network device and the third configuration information sent by the first network device to the terminal device are completely the same. A parameter included in the third configuration information obtained by the first network device may be the same as a parameter included in the third configuration information sent by the first network device to the terminal device. However, a format of the third configuration information obtained by the first network device may be different from a format of the third configuration information sent by the first network device to the terminal device, and a location of a parameter in the third configuration information obtained by the first network device is different from a location of the same parameter in the third configuration information sent by the first network device to the terminal device. That the third configuration information obtained by the first network device is configuration information 1, and the third configuration information sent by the first network device to the terminal device is configuration information 2 is used as an example. For example, both the configuration information 1 and the configuration information 2 may include the identifier of the serving cell and the RNTI. However, the identifier of the serving cell may be located in a bit field from the first bit to the eighth bit of the configuration information 1 and a bit field from the sixth bit to the thirteenth bit of the configuration information 2, and the RNTI may be located in a bit field from the ninth bit to the thirteenth bit of the configuration information 1 and a bit field from the first bit to the fifth bit of the configuration information 2.

When the terminal device works in the DC mode, the first network device may obtain the third configuration information from the second network device. When the terminal device works in the non-DC mode, the first network device may generate the third configuration information.

Further, after receiving the third configuration information, the terminal device updates the first configuration information based on the third configuration information. For example, when the third configuration information includes the identifier of the first multicast service, the RNTI corresponding to the first multicast service, and the cell identifier of the serving cell corresponding to the first multicast service, the terminal device may replace the first configuration information with the third configuration information. Alternatively, when the third configuration information includes the identifier of the first multicast service and the RNTI corresponding to the first multicast service, the terminal device may replace the RNTI that corresponds to the first multicast service and that is included in the first configuration information with the RNTI that corresponds to the first multicast service and that is included in the third configuration information.

Further, the terminal device may receive the multicast service based on updated first configuration information.

That the first multicast service is a multicast service 1, an RNTI corresponding to the first multicast service is an RNTI 1, and a serving cell corresponding to the RNTI 1 is a serving cell 1 is used as an example. For example, the first configuration information includes {multicast service 1, RNTI 1, serving cell 1}. When an RNTI corresponding to the multicast service 1 is switched to an RNTI 2, but a serving cell for transmitting the multicast service 1 is still the serving cell 1, the first network device may obtain third configuration information {multicast service 1, RNTI 2} or third configuration information {multicast service 1, RNTI 2, serving cell 1}, and send the obtained third configuration information to the terminal device. After receiving the third configuration information, the terminal device may update the first configuration information to {multicast service 1, RNTI 2, serving cell 1}, monitor, in the serving cell 1 based on the updated first configuration information by using the RNTI 2, a PDCCH for scheduling the multicast service 1, and receive the multicast service 1 at a time-frequency resource location indicated by the detected PDCCH.

Further, in a third possible implementation of the method shown in FIG. 4, when the network side stops sending the first multicast service to the terminal device, to release the transmission resource and improve transmission resource utilization, the method may further include: The first network device sends, to the terminal device, second indication information for indicating that the first configuration information is invalid.

Further, after receiving the second indication information for indicating that the first configuration information is invalid, the terminal device no longer monitors the PDCCH in the serving cell corresponding to the first multicast service by using the RNTI corresponding to the first multicast service. The terminal device may further delete the first configuration information, to reduce storage resources occupied by the configuration information and release transmission resources.

In a scenario in which the terminal device works in the DC mode, after receiving first indication information from the second network device, the first network device may send the second indication information to the terminal device based on the first indication information.

In a scenario in which the terminal device works in the non-DC mode, when the first network device determines to stop sending the first multicast service to the terminal device, the first network device may send, to the terminal device, the second indication information for indicating that the first configuration information is invalid.

That the first multicast service is a multicast service 1, an RNTI corresponding to the first multicast service is an RNTI 1, and a serving cell corresponding to the first multicast service is a serving cell 1 is used as an example. For example, the first configuration information includes {multicast service 1, RNTI 1, serving cell 1}. After receiving, from the second network device, indication information for indicating that the second network device stops sending the multicast service 1, the first network device may send, to the terminal device, indication information indicating that the first configuration information is invalid. After receiving the configuration information for indicating that the first configuration information is invalid, the terminal device deletes the first configuration information {multicast service 1, RNTI 1, serving cell 1}, and no longer monitors, in the serving cell 1 by using the RNTI 1, a PDCCH for scheduling the multicast service 1.

It should be noted that, if the terminal device has updated the first configuration information based on the third configuration information before the third possible implementation of the method shown in FIG. 4 is performed, the terminal device may delete the updated first configuration information when the third possible implementation of the method shown in FIG. 4 is performed.

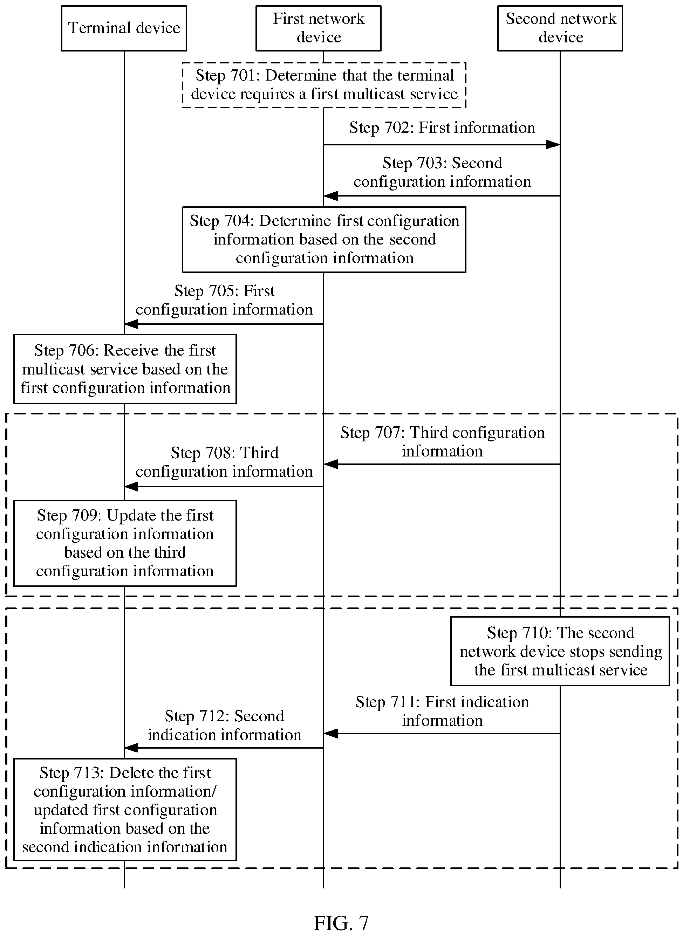

With reference to FIG. 7, the following describes in detail the method shown in FIG. 4 by using an example in which the terminal device works in the DC mode, and the first configuration information includes the identifier of the serving cell corresponding to the first multicast service, the identifier of the first multicast service, and the RNTI corresponding to the first multicast service.

FIG. 7 is a flowchart of another multicast service transmission method according to an embodiment of this application. As shown in FIG. 7, the method includes step 701 to step 713.

Step 701: A first network device determines that a terminal device requires a first multicast service.

For example, the first network device may receive a request message used by the terminal device to request the first multicast service, and determine, based on the request message, that the terminal device requires the first multicast service.

It may be understood that step 701 is an optional step. Step 701 may not be performed when the multicast service transmission method provided in this embodiment of this application is performed.

Step 702: The first network device sends first information to a second network device.

For related descriptions of the first information and step 702, refer to the descriptions in step 601. Details are not described.

Step 703: The second network device receives the first information, sends second configuration information to the first network device, and sends the first multicast service to the terminal device based on the second configuration information.

For related descriptions of the second configuration information and the action of sending the second configuration information by the second network device to the first network device, refer to the descriptions in step 602. Details are not described.

That the second network device sends the first multicast service to the terminal device based on the second configuration information may include: The second network device scrambles, by using an RNTI corresponding to the first multicast service, a PDCCH for scheduling the first multicast service, sends the scrambled PDCCH to the terminal device in a serving cell corresponding to the first multicast service, and sends the first multicast service to the terminal device at a time-frequency resource location indicated by the PDCCH.

Step 704: The first network device receives the second configuration information, and determines first configuration information based on the second configuration information.

For step 704, refer to the descriptions in step 603. Details are not described.

Step 705: The first network device sends the first configuration information to the terminal device.

For step 705, refer to the descriptions in step 402. Details are not described.

Step 706: The terminal device receives the first configuration information, and receives the first multicast service based on the first configuration information.

For step 706, refer to the descriptions in step 403. Details are not described.

Further, when the RNTI corresponding to the first multicast service and/or the serving cell corresponding to the first multicast service change/changes, to ensure accuracy of receiving the multicast service by the terminal device, the method shown in FIG. 7 may further include the following steps.

Step 707: The second network device sends third configuration information to the first network device.

For related descriptions of the third configuration information and a specific implementation of step 707, refer to the descriptions in the second possible implementation shown in FIG. 4. Details are not described.

Step 708: The first network device receives the third configuration information, and sends the third configuration information to the terminal device.

Step 709: The terminal device receives the third configuration information, updates the first configuration information based on the third configuration information, and receives the first multicast service based on updated first configuration information.

It may be understood that step 707 to step 709 are all optional steps. Step 707 to step 709 may not be performed when the multicast service transmission method provided in this embodiment of this application is performed.

Further, when sending of the first multicast service is stopped, to save resources, the method shown in FIG. 7 may further include the following steps.

Step 710: The second network device stops sending the first multicast service.

Step 711: The second network device sends first indication information to the first network device.

For related descriptions of the first indication information, refer to the descriptions in the third possible implementation of the method shown in FIG. 4. Details are not described.

Step 712: The first network device receives the first indication information, and sends second indication information to the terminal device based on the first indication information.

Step 713: The terminal device receives the second indication information, and deletes the first configuration information/updated first configuration information based on the second indication information.

It may be understood that step 710 to step 713 are all optional steps. Step 710 to step 713 may not be performed when the multicast service transmission method provided in this embodiment of this application is performed.

Through application of the method shown in FIG. 7, when the terminal device works in a DC mode, the first network device may request the second network device to assist the first network device in sending a multicast service to the terminal device, and the second network device configures configuration information related to the multicast service for the terminal device through the first network device before sending the multicast service to the terminal device. The terminal device monitors, in a specified serving cell corresponding to the first multicast service based on the configuration information related to the multicast service by using a corresponding RNTI, a PDCCH for scheduling the multicast service, and receives the multicast service at a time-frequency resource location indicated by the detected PDCCH. In this way, the terminal device does not need to blindly monitor the PDCCH in all cells by using the corresponding RNTI, so that power consumption of the terminal device for monitoring the PDCCH and receiving the multicast service based on the PDCCH in a CA scenario is reduced. In addition, the second network device updates the configuration information related to the first multicast service in time, and notifies the terminal device of updated configuration information, so that the terminal device receives the multicast service based on the updated configuration information. Therefore, accuracy of receiving the multicast service is ensured. Subsequently, when sending of the multicast service is stopped, that the configuration information related to the multicast service is invalid is notified to the terminal device, so that the terminal device deletes the configuration information related to the multicast service, and does not monitor, in the serving cell indicated by the configuration information by using the corresponding RNTI, the PDCCH for scheduling the multicast service. Therefore, resources for transmitting the PDCCH are released.

The foregoing mainly describes the solutions provided in embodiments of this application from a perspective of interaction between network elements. It may be understood that, to implement the foregoing functions, each communication apparatus, for example, the terminal device, the first network device, or the second network device, includes a corresponding hardware structure and/or software module for performing each function. A person skilled in the art should easily be aware that, in combination with algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device, the first network device, or the second network device may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in embodiments of this application, division into the modules is an example, and is merely logical function division. During actual implementation, another division manner may be used.

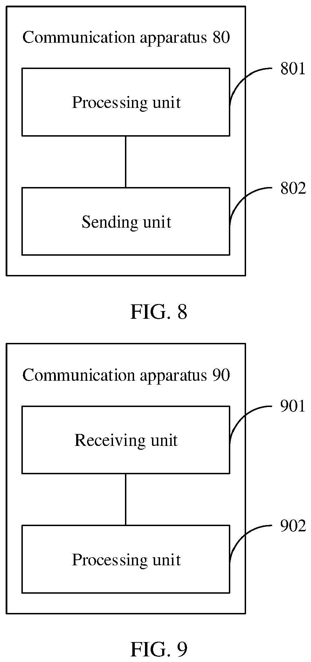

When each function module is obtained through division based on each corresponding function, FIG. 8 is a diagram of a structure of a communication apparatus 80. The communication apparatus 80 may be a first network device, or a chip or a system-on-a-chip in the first network device. The communication apparatus 80 may be configured to perform functions of the first network device in the foregoing embodiments. The communication apparatus 80 shown in FIG. 8 includes a processing unit 801 and a sending unit 802.

The processing unit 801 is configured to determine first configuration information that is for indicating a terminal device to receive a first multicast service and that includes a cell identifier of a serving cell corresponding to the first multicast service and one or more of the following information: an identifier of the first multicast service and an RNTI corresponding to the first multicast service. For example, the processing unit 801 may support the communication apparatus 80 in performing step 401 and step 704.

The sending unit 802 is configured to send the first configuration information to the terminal device. For example, the sending unit 802 may support the communication apparatus 80 in performing step 402, step 603, and step 705.

For a specific implementation of the communication apparatus, refer to behavior functions of the first network device in the methods shown in FIG. 4 to FIG. 7.

In another feasible implementation, the processing unit 801 in FIG. 8 may be replaced with a processor, and the processor may integrate functions of the processing unit 801. The sending unit 802 in FIG. 8 may be replaced with a transceiver, and the transceiver may integrate functions of the sending unit 802. Further, the communication apparatus 80 shown in FIG. 8 may include a memory. When the processing unit 801 in FIG. 8 is replaced with the processor, and the sending unit 802 in FIG. 8 is replaced with the transceiver, the communication apparatus 80 in this embodiment of this application may be the communication apparatus 300 shown in FIG. 3.

FIG. 9 is a diagram of a structure of a communication apparatus 90. The communication apparatus 90 may be a terminal device, or a chip or a system-on-a-chip in the terminal device. The communication apparatus 90 may be configured to perform functions of the terminal device in the foregoing embodiments. In a feasible implementation, the communication apparatus 90 shown in FIG. 9 includes a receiving unit 901 and a processing unit 902.

The receiving unit 901 is configured to receive, from a first network device, first configuration information including a cell identifier of a serving cell corresponding to a first multicast service and one or more of the following information: an identifier of the first multicast service and an RNTI corresponding to the first multicast service. For example, the receiving unit 901 supports the communication apparatus 90 in performing the actions of receiving the first configuration information in step 403 and step 706.

The processing unit 902 is configured to receive the first multicast service based on the first configuration information through the receiving unit 901. For example, the processing unit 902 may perform the actions of receiving the first multicast service in step 403 and step 706.

For a specific implementation of the communication apparatus 90, refer to behavior functions of the terminal device in the methods shown in FIG. 4 to FIG. 7.

In another feasible implementation, the receiving unit 901 in FIG. 9 may be replaced with a transceiver or a transceiver unit, and the transceiver may integrate functions of the receiving unit 901. The processing unit 902 in FIG. 9 may be replaced with a processor, and the processor may integrate functions of the processing unit 902. Further, the communication apparatus 90 shown in FIG. 9 may include a memory. When the receiving unit 901 is replaced with the transceiver or the transceiver unit, and the processing unit 902 is replaced with the processor, the communication apparatus 90 in this embodiment of this application may be the communication apparatus 300 shown in FIG. 3.

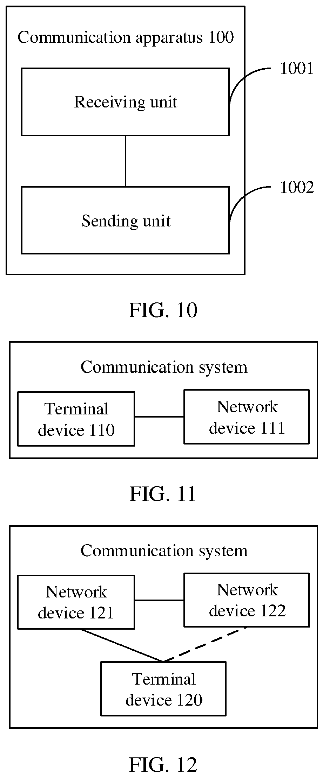

FIG. 10 is a diagram of a structure of a communication apparatus 100. The communication apparatus 100 may be a second network device, or a chip or a system-on-a-chip in the second network device. The communication apparatus 100 may be configured to perform functions of the second network device in the foregoing embodiments. In a feasible implementation, the communication apparatus 100 shown in FIG. 10 includes a receiving unit 1001 and a sending unit 1002.

The receiving unit 1001 is configured to receive, from a first network device, first information that includes an identifier of a terminal device and an identifier of a first multicast service and that is for indicating that the terminal device needs to receive the first multicast service. For example, the receiving unit 1001 may support the communication apparatus 100 in performing the actions of receiving the first information in step 602 and step 703.

The sending unit 1002 is configured to send, to the first network device, second configuration information including the identifier of the first multicast service, an RNTI corresponding to the first multicast service, and a cell identifier of a serving cell corresponding to the first multicast service. For example, the sending unit 1002 may support the communication apparatus 100 in performing the actions of sending the second configuration information in step 602 and step 703.

For a specific implementation of the communication apparatus 100, refer to behavior functions of the second network device in the methods shown in FIG. 4 to FIG. 7.

In another feasible implementation, the receiving unit 1001 and the sending unit 1002 in FIG. 10 may be replaced with a transceiver or a transceiver unit, and the transceiver may integrate functions of the receiving unit 1001 and the sending unit 1002. Further, the communication apparatus 100 shown in FIG. 10 may include a processor and a memory. When the receiving unit 1001 and the sending unit 1002 are replaced with the transceiver or the transceiver unit, the communication apparatus 100 in this embodiment of this application may be the communication apparatus 300 shown in FIG. 3.

FIG. 11 is a diagram of a structure of a communication system according to an embodiment of this application. As shown in FIG. 11, the system may include a terminal device 110 and a network device 111. Optionally, in the system shown in FIG. 11, the terminal device 110 works in a non-DC mode. In other words, the terminal device 110 accesses one network device.

The terminal device 110 has a function of the communication apparatus 90 shown in FIG. 9, and the network device 111 may have a function of the communication apparatus 80 shown in FIG. 8.

For example, the network device 111 is configured to: determine first configuration information that is for indicating the terminal device 110 to receive a first multicast service and that includes a cell identifier of a serving cell corresponding to the first multicast service and one or more of the following information: an identifier of the first multicast service and an RNTI corresponding to the first multicast service; and send the first configuration information to the terminal device 110.

The terminal device 110 is configured to: receive the first configuration information, and receive the first multicast service based on the first configuration information.

For a specific implementation of the terminal device 110, refer to behavior functions of the terminal device in the methods shown in FIG. 4 to FIG. 7. For a specific implementation of the network device 111, refer to behavior functions of the first network device in the methods shown in FIG. 4 to FIG. 7.

FIG. 12 is a diagram of a structure of a communication system according to an embodiment of this application. As shown in FIG. 12, the system may include a terminal device 120, a network device 121, and a network device 122. In the system shown in FIG. 12, the terminal device 120 may work in a DC mode. The network device 122 may send configuration information related to a multicast service to the terminal device 120 through the network device 121, scramble, by using a corresponding RNTI, a PDCCH for scheduling the multicast service, send the scrambled PDCCH to the terminal device, and send the multicast service to the terminal device at a time-frequency resource location indicated by the PDCCH. The terminal device may monitor, based on the configuration information, the PDCCH in a specified serving cell by using the corresponding RNTI, and receive, at the time-frequency resource location indicated by the detected PDCCH, the multicast service sent by the network device 122. A path on which the network device 122 transmits the multicast service to the terminal device 120 may be shown by a dashed line in FIG. 12.

The terminal device 120 has a function of the communication apparatus 90 shown in FIG. 9, and the network device 121 may have a function of the communication apparatus 80 shown in FIG. 8. The network device 122 has a function of the communication apparatus 100 shown in FIG. 10.

For example, the network device 121 is configured to send, to the network device 122, first information that is for indicating that the terminal device 120 needs to receive a first multicast service and that includes an identifier of the first multicast service and an identifier of the terminal device 120.

The network device 122 is configured to: receive the first information; determine to provide the first multicast service for the terminal device 120; send, to the network device 121, first configuration information including the identifier of the first multicast service, an RNTI corresponding to the first multicast service, and a cell identifier of a serving cell corresponding to the first multicast service; and send the second configuration information to the terminal device 120.

The network device 121 is further configured to: receive the second configuration information; and send, to the terminal device 120 based on the second configuration information, first configuration information that is for indicating the terminal device 120 to receive the first multicast service and that includes the identifier of the first multicast service, the RNTI corresponding to the first multicast service, and the cell identifier of the serving cell corresponding to the first multicast service.

The terminal device 120 is configured to: receive the first configuration information, and receive the first multicast service based on the first configuration information.

For a specific implementation of the terminal device 120, refer to behavior functions of the terminal device in the methods shown in FIG. 4 to FIG. 7. For a specific implementation of the network device 121, refer to behavior functions of the first network device in the methods shown in FIG. 4 to FIG. 7. For a specific implementation of the network device 122, refer to behavior functions of the second network device in the methods shown in FIG. 4 to FIG. 7.

An embodiment of this application further provides a computer-readable storage medium. All or some of the procedures in the foregoing method embodiments may be completed by a computer program instructing related hardware. The program may be stored in the foregoing computer-readable storage medium. When the program is executed, the procedures of the foregoing method embodiments may be performed. The computer-readable storage medium may be an internal storage unit of the communication apparatus (including a data transmit end and/or a data receive end) in any one of the foregoing embodiments, for example, a hard disk or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) of the communication apparatus. Further, the computer-readable storage medium may include both the internal storage unit and the external storage device of the communication apparatus. The computer-readable storage medium is configured to store the computer program and other programs and data that are required by the communication apparatus. The computer-readable storage medium may be further configured to temporarily store data that has been output or is to be output.

It should be noted that, in the specification, claims, and accompanying drawings of this application, terms "first", "second", and the like are intended to distinguish between different objects but do not indicate a particular sequence. In addition, terms "include", "have", and any other variant thereof are intended to cover non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be understood that in this application, "at least one (item)" means one or more, "a plurality of" means two or more, and "at least two (items)" means two, three, or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" usually represents an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, "a and b", "a and c", "b and c", or "a, b, and c", where a, b, and c each may be singular or plural.

Through description of the foregoing implementations, a person skilled in the art may clearly understand that, for the purpose of convenient and brief description, division into the foregoing function modules is merely used as an example for description. During actual application, the foregoing functions may be allocated to different function modules and implemented based on requirements, that is, an inner structure of an apparatus is divided into different function modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, that is, may be located in one place, or may be distributed in a plurality of different places. Some or all of the units may be selected based on an actual requirement to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit. When the integrated unit is implemented in a form of a software function unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes various media that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Therefore, the protection scope of this application shall be subject to the protection scope of the claims.

## Claims

1. A multicast service transmission method, wherein the method is applied to a first network device, wherein a terminal is connected to the first network device and to a second network device, and wherein the network devices use
a carrier aggregation, CA, technology to send a scrambled physical downlink control channel, PDCCH, scrambled using a radio network temporary identifier, RNTI, for scheduling the multicast service to the terminal device by using a part of a plurality of component carriers, CCs, corresponding to cells; and the method comprises:
determining (401, 704) first configuration information, wherein the first configuration information is for indicating a terminal device to receive a first multicast service, and the first configuration information comprises a cell identifier of a serving cell corresponding to the first multicast service and one or more of the following information: an identifier of the first multicast service and the radio network temporary identifier, RNTI, corresponding to the first multicast service; and
sending (402, 603, 705) the first configuration information to the terminal device, so that the terminal device receives, based on the configuration information related to the multicast service, the multicast service in the specified serving cell by monitoring the PDCCH only in the specified serving cell and using the corresponding RNTI;
wherein the method further comprises:
sending (601, 702) first information to a second network device, wherein the first information comprises an identifier of the terminal device and the identifier of the first multicast service, and the first information is for indicating that the terminal device needs to receive the first multicast service;
receiving (602, 703) second configuration information from the second network device; and
the determining (401, 704) of the first configuration information is based on the received second configuration information;
wherein the second configuration information comprises the identifier of the first multicast service, the RNTI, and the cell identifier of the serving cell corresponding to the first multicast service.

2. The method according to claim 1, wherein
the cell identifier is a physical cell identifier, PCI, of the serving cell; or
the cell identifier is a number of the serving cell in a serving cell set of the terminal device; or
the cell identifier is a cell global identifier of the serving cell.

3. The method according to claim 1 or 2, wherein
the first configuration information further comprises an identifier of a transmission resource of the first multicast service.

4. The method according to any one of claims 1 to 3, wherein
the first information is comprised in a secondary cell group addition request message.

5. The method according to any one of claims 1 to 4, wherein the method further comprises:
receiving a secondary cell group addition response message from the second network device, wherein the secondary cell group addition response message comprises second configuration information.

6. The method according to any one of claims 1 to 5, wherein the method further comprises:
receiving third configuration information from the second network device, wherein the third configuration information is for updating the first configuration information; and
sending the third configuration information to the terminal device.

7. The method according to any one of claims 1 to 6, wherein the method further comprises:
receiving first indication information from the second network device, wherein the first indication information is for indicating that the second network device stops sending the first multicast service.

8. The multicast service transmission method of any one of claims 1 to 7, where the terminal device performs the following steps:
receiving (402, 603), by the terminal device, first configuration information from the
first network device, wherein
the first configuration information is for indicating the terminal device to receive the first multicast service, and the first configuration information comprises a cell identifier of a serving cell corresponding to the first multicast service and one or more of the following information: an identifier of the first multicast service and a radio network temporary identifier RNTI corresponding to the first multicast service; and
receiving (403), by the terminal device, the first multicast service based on the first configuration information.

9. The method according to claim 8, wherein
the cell identifier is a physical cell identifier PCI of the serving cell; or
the cell identifier is a number of the serving cell in a serving cell set of the terminal device; or
the cell identifier is a cell global identifier of the serving cell.

10. The method according to claim 8 or 9, wherein
the first configuration information further comprises an identifier of a transmission resource of the first multicast service.

11. The method according to any one of claims 8 to 10, wherein the method further comprises:
receiving, by the terminal device, third configuration information from the first network device, wherein the third configuration information is for updating the first configuration information.

12. The method according to any one of claims 8 to 11, wherein the method further comprises:
receiving, by the terminal device, second indication information from the first network device, wherein the second indication information is for indicating that the first configuration information is invalid.

13. A communication apparatus, comprising:
means for performing the method according to any one of claims 1 to 7.

14. A communication system comprising the apparatus of claim 13 and comprising:
means for performing the method according to any one of claims 8 to 12.

## Patentansprüche

1. Multicastdienst-Übertragungsverfahren, wobei das Verfahren auf ein erstes Netzwerkgerät angewandt wird, wobei ein Endgerät mit dem ersten Netzwerkgerät und mit einem zweiten Netzwerkgerät verbunden ist und wobei die Netzwerkgeräte eine Trägeraggregations- bzw. CA-Technologie verwenden, um einen verwürfelten physikalischen Abwärtsstrecken-Steuerkanal, PDCCH, verwürfelt unter Verwendung einer temporären Funknetzwerkkennung, RNTI, zur Planung des Multicastdienstes an das Endgerät unter Verwendung eines Teiles einer Vielzahl von Komponententrägern, CCs, korrespondierend mit Zellen zu senden; und wobei das Verfahren umfasst:
Bestimmen (401, 704) von ersten Konfigurationsinformationen, wobei die ersten Konfigurationsinformationen dazu dienen, einem Endgerät anzugeben, einen ersten Multicastdienst zu empfangen, und die ersten Konfigurationsinformationen eine Zellenkennung einer Serving-Zelle korrespondierend mit dem ersten Multicastdienst und eine oder mehrere der folgenden Informationen umfassen: eine Kennung des ersten Multicastdienstes und die temporäre Funknetzwerkkennung, RNTI, korrespondierend mit dem ersten Multicastdienst; und
Senden (402, 603, 705) der ersten Konfigurationsinformationen an das Endgerät, so dass das Endgerät basierend auf den Konfigurationsinformationen, die zu dem Multicastdienst in Beziehung stehen, den Multicastdienst in der spezifizierten Serving-Zelle durch Überwachen des PDCCH nur in der spezifizierten Serving-Zelle und unter Verwendung der korrespondierenden RNTI empfängt;
wobei das Verfahren ferner umfasst:
Senden (601, 702) von ersten Informationen an ein zweites Netzwerkgerät, wobei die ersten Informationen eine Kennung des Endgeräts und die Kennung des ersten Multicastdienstes umfassen und die ersten Informationen dazu dienen, anzugeben, dass das Endgerät den ersten Multicastdienst empfangen muss;
Empfangen (602, 703) von zweiten Konfigurationsinformationen von dem zweiten Netzwerkgerät; und
wobei das Bestimmen (401, 704) der ersten Konfigurationsinformationen auf den empfangenen zweiten Konfigurationsinformationen basiert;
wobei die zweiten Konfigurationsinformationen die Kennung des ersten Multicastdienstes, die RNTI und die Zellenkennung der Serving-Zelle korrespondierend mit dem ersten Multicastdienst umfassen.

2. Verfahren nach Anspruch 1, wobei
die Zellenkennung eine physikalische Zellenkennung, PCI, der Serving-Zelle ist; oder
die Zellenkennung eine Nummer der Serving-Zelle in einem Serving-Zellen-Satz des Endgeräts ist; oder
die Zellenkennung eine globale Zellenkennung der Serving-Zelle ist.

3. Verfahren nach Anspruch 1 oder 2, wobei
die ersten Konfigurationsinformationen ferner eine Kennung eines Übertragungsbetriebsmittels des ersten Multicastdienstes umfassen.

4. Verfahren nach einem der Ansprüche 1 bis 3, wobei
die ersten Informationen in einer Anforderungsnachricht zum Hinzufügen einer sekundären Zellengruppe enthalten sind.

5. Verfahren nach einem der Ansprüche 1 bis 4, wobei das Verfahren ferner umfasst:
Empfangen einer Antwortnachricht zum Hinzufügen einer sekundären Zellengruppe von dem zweiten Netzwerkgerät, wobei die Antwortnachricht zum Hinzufügen einer sekundären Zellengruppe zweite Konfigurationsinformationen umfasst.

6. Verfahren nach einem der Ansprüche 1 bis 5, wobei das Verfahren ferner umfasst:
Empfangen von dritten Konfigurationsinformationen von dem zweiten Netzwerkgerät, wobei die dritten Konfigurationsinformationen dazu dienen, die ersten Konfigurationsinformationen zu aktualisieren; und
Senden der dritten Konfigurationsinformationen an das Endgerät.

7. Verfahren nach einem der Ansprüche 1 bis 6, wobei das Verfahren ferner umfasst:
Empfangen von ersten Angabeinformationen von dem zweiten Netzwerkgerät, wobei die ersten Angabeinformationen dazu dienen, anzugeben, dass das zweite Netzwerkgerät stoppt, den ersten Multicastdienst zu senden.

8. Multicastdienst-Übertragungsverfahren nach einem der Ansprüche 1 bis 7, wobei das Endgerät die folgenden Schritte durchführt:
Empfangen (402, 603), durch das Endgerät, von ersten Konfigurationsinformationen von dem ersten Netzwerkgerät, wobei
die ersten Konfigurationsinformationen dazu dienen, dem Endgerät anzugeben, den ersten Multicastdienst zu empfangen, und die ersten Konfigurationsinformationen eine Zellenkennung einer Serving-Zelle korrespondierend mit dem ersten Multicastdienst und eine oder mehrere der folgenden Informationen umfassen: eine Kennung des ersten Multicastdienstes und eine temporäre Funknetzwerkkennung, RNTI, korrespondierend mit dem ersten Multicastdienst; und
Empfangen (403), durch das Endgerät, des ersten Multicastdienstes basierend auf den ersten Konfigurationsinformationen.

9. Verfahren nach Anspruch 8, wobei
die Zellenkennung eine physikalische Zellenkennung, PCI, der Serving-Zelle ist; oder
die Zellenkennung eine Nummer der Serving-Zelle in einem Serving-Zellen-Satz des Endgeräts ist; oder
die Zellenkennung eine globale Zellenkennung der Serving-Zelle ist.

10. Verfahren nach Anspruch 8 oder 9, wobei
die ersten Konfigurationsinformationen ferner eine Kennung eines Übertragungsbetriebsmittels des ersten Multicastdienstes umfassen.

11. Verfahren nach einem der Ansprüche 8 bis 10, wobei das Verfahren ferner umfasst:
Empfangen, durch das Endgerät, von dritten Konfigurationsinformationen von dem ersten Netzwerkgerät, wobei die dritten Konfigurationsinformationen dazu dienen, die ersten Konfigurationsinformationen zu aktualisieren.

12. Verfahren nach einem der Ansprüche 8 bis 11, wobei das Verfahren ferner umfasst: Empfangen, durch das Endgerät, von zweiten Angabeinformationen von dem ersten Netzwerkgerät, wobei die zweiten Angabeinformationen dazu dienen, anzugeben, dass die ersten Konfigurationsinformationen ungültig sind.

13. Kommunikationsvorrichtung, umfassend:
Mittel zum Durchführen des Verfahrens nach einem der Ansprüche 1 bis 7.

14. Kommunikationssystem, umfassend die Vorrichtung nach Anspruch 13 und umfassend:
Mittel zum Durchführen des Verfahrens nach einem der Ansprüche 8 bis 12.

## Revendications

1. Procédé de transmission de service de multi-diffusion, dans lequel le procédé est appliqué à un premier dispositif de réseau, dans lequel un terminal est connecté au premier dispositif de réseau et à un deuxième dispositif de réseau, et dans lequel les dispositifs de réseau utilisent une technologie d'agrégation de porteuses, CA, pour envoyer un canal de contrôle en liaison descendante physique, PDCCH, brouillé, brouillé en utilisant un identifiant temporaire de réseau radio, RNTI, pour planifier le service de multi-diffusion sur le dispositif terminal en utilisant une partie d'une pluralité de porteuses de composants, CC, correspondant aux cellules ; et le procédé comprend :
la détermination (401, 704) de premières informations de configuration, dans lequel les premières informations de configuration servent à indiquer à un dispositif terminal de recevoir un premier service de multi-diffusion, et les premières informations de configuration comprennent un identifiant de cellule d'une cellule de service correspondant au premier service de multi-diffusion et une ou plusieurs des informations suivantes : un identifiant du premier service de multi-diffusion et l'identifiant temporaire de réseau radio, RNTI, correspondant au premier service de multi-diffusion ; et
l'envoi (402, 603, 705) des premières informations de configuration au dispositif terminal, de sorte que le dispositif terminal reçoit, sur la base des informations de configuration liées au service de multi-diffusion, le service de multi-diffusion dans la cellule de service spécifiée en surveillant le PDCCH seulement dans la cellule de service spécifiée et en utilisant le RNTI correspondant ;
dans lequel le procédé comprend en outre :
l'envoi (601, 702) des premières informations à un deuxième dispositif de réseau, dans lequel les premières informations comprennent un identifiant du dispositif terminal et l'identifiant du premier service de multi-diffusion, et les premières informations servent à indiquer que le dispositif terminal doit recevoir le premier service de multi-diffusion ;
la réception (602, 703) de deuxièmes informations de configuration à partir du deuxième dispositif de réseau ; et
la détermination (401, 704) des premières informations de configuration est basée sur les deuxièmes informations de configuration reçues ;
dans lequel les deuxièmes informations de configuration comprennent l'identifiant du premier service de multi-diffusion, le RNTI, et l'identifiant de cellule de la cellule de service correspondant au premier service de multi-diffusion.

2. Procédé selon la revendication 1, dans lequel
l'identifiant de cellule est un identifiant de cellule physique, PCI, de la cellule de service ; ou
l'identifiant de cellule est un numéro de cellule de service dans un ensemble de cellules de service du dispositif terminal ; ou
l'identifiant de cellule est un identifiant global de cellules de la cellule de service.

3. Procédé selon la revendication 1 ou 2, dans lequel
les premières informations de configuration comprennent en outre un identifiant d'une ressource de transmission du premier service de multi-diffusion.

4. Procédé selon l'une quelconque des revendications 1 à 3, dans lequel
les premières informations sont comprises dans un message de requête d'ajout de groupe de cellules secondaires.

5. Procédé selon l'une quelconque des revendications 1 à 4, dans lequel le procédé comprend en outre :
la réception d'un message de réponse d'ajout de groupe de cellules secondaires à partir du deuxième dispositif de réseau, dans lequel le message de réponse d'ajout de groupe de cellules secondaires comprend des deuxièmes informations de configuration.

6. Procédé selon l'une quelconque des revendications 1 à 5, dans lequel le procédé comprend en outre :
la réception de troisièmes informations de configuration à partir du deuxième dispositif de réseau, dans lequel les troisièmes informations de configuration servent à mettre à jour les premières informations de configuration ; et
l'envoi des troisièmes informations de configuration au dispositif terminal.

7. Procédé selon l'une quelconque des revendications 1 à 6, dans lequel le procédé comprend en outre :
la réception des premières informations d'indication à partir du deuxième dispositif de réseau, dans lequel les premières informations d'indication servent à indiquer que le deuxième dispositif de réseau arrête d'envoyer le premier service de multi-diffusion.

8. Procédé de transmission de service de multi-diffusion selon l'une quelconque des revendications 1 à 7, dans lequel le dispositif terminal exécute les étapes suivantes :
la réception (402, 603), par le dispositif terminal, de premières informations de configuration à partir du premier dispositif de réseau, dans lequel les premières informations de configuration servent à indiquer au dispositif terminal de recevoir le premier service de multi-diffusion, et les premières informations de configuration comprennent un identifiant de cellule d'une cellule de service correspondant au premier service de multi-diffusion et une ou plusieurs des informations suivantes : un identifiant du premier service de multi-diffusion et un identifiant temporaire de réseau radio RNTI correspondant au premier service de multi-diffusion ; et
la réception (403), par le dispositif terminal, du premier service de multi-diffusion sur la base des premières informations de configuration.

9. Procédé selon la revendication 8, dans lequel
l'identifiant de cellule est un identifiant de cellule physique PCI de la cellule de service ; ou
l'identifiant de cellule est un numéro de la cellule de service dans un ensemble de cellules de service du dispositif terminal ; ou
l'identifiant de cellule est un identifiant global de cellule de la cellule de service.

10. Procédé selon la revendication 8 ou 9, dans lequel
les premières informations de configuration comprennent en outre un identifiant d'une ressource de transmission du premier service de multi-diffusion.

11. Procédé selon l'une quelconque des revendications 8 à 10, dans lequel le procédé comprend en outre :
la réception, par le dispositif terminal, de troisièmes informations de configuration à partir du premier dispositif de réseau, dans lequel les troisièmes informations de configuration servent à mettre à jour les premières informations de configuration.

12. Procédé selon l'une quelconque des revendications 8 à 11, dans lequel le procédé comprend en outre :
la réception, par le dispositif terminal, de deuxièmes informations d'indication à partir du premier dispositif de réseau, dans lequel les deuxièmes informations d'indication servent à indiquer que les premières informations de configuration sont invalides.

13. Appareil de communication, comprenant :
des moyens de mettre en oeuvre le procédé selon l'une quelconque des revendications 1 à 7.

14. Système de communication comprenant l'appareil selon la revendication 13 et comprenant :
des moyens de mettre en oeuvre le procédé selon l'une quelconque des revendications 8 à 12.
